# DEMANDE DE BREVET EUROPEEN

(11) **EP 1 642 779 A1**
(43) Date de publication de la demande: **05.04.2006**
(21) Numéro de dépôt: 05370030.8
(22) Date de dépôt: 28.09.2005
(51) Int. Cl.: B60R 19/16

(54) **Butoir amortisseur de chocs notamment pour véhicule automobile**

(30) Priorité: 29.09.2004 FR 0410311
(71) Demandeur: THIRIET S.A.S., 08000 Warcq (FR)
(72) Inventeur: Thiriet, Philippe, 08420 Warcq (FR)
(74) Mandataire: Duthoit, Michel Georges André

(57) **Abrégé**

L'invention est relative à un butoir amortisseur (1) notamment pour véhicule automobile, constitué d'un corps équipé d'au moins un organe de contact assujetti à des moyens élastiques, caractérisé par le fait que :
- le corps (2) présente un socle arrière (11) de fixation et au moins un évidement (4) traversant débouchant au niveau d'une ouverture avant (6) et au niveau d'une ouverture arrière (5),
- ledit au moins un organe de contact (3), est inséré dans ledit évidement (4) et est, d'une part, apte à faire saillie dudit corps (2) au niveau de ladite ouverture avant (6), et d'autre part, apte à se déplacer dans ledit évidement (4),
- ladite ouverture avant (6) est apte à retenir ledit au moins un organe de contact (3) dans l'évidement, l'ouverture arrière (5) est apte à permettre l'insertion dudit au moins un organe de contact (3) et desdits moyens élastiques (8) dans ledit évidement,
- ledit corps (2) présentant en outre des moyens de blocage (7) pour retenir, au moins avant la fixation du butoir (1), ledit organe de contact (3) et lesdits moyens élastiques (8) dans l'évidement (4).

## Description

La présente invention est relative à un butoir amortisseur de chocs, notamment pour véhicule automobile, et trouvera une application particulière, par exemple, à l'arrière d'une remorque d'un camion.

En prévision du chargement ou déchargement d'un camion, le conducteur vient placer la remorque en butée contre la paroi verticale d'un quai de chargement. La remorque est alors chargée ou déchargée. Ce faisant, sous l'effet des variations de charge, la garde au sol de la remorque varie, ce qui provoque une usure prématurée des butoirs, généralement réalisés sous la forme de blocs en caoutchouc, sous l'effet des frottements contre le quai.

On connaît alors des butoirs à billes ou à galets, qui permettent de rouler sans frottement sur le quai, dans lesquels un élastomère, tel qu'un caoutchouc, est utilisé comme moyen élastique pour amortir les chocs.

Néanmoins, ces moyens élastiques utilisés n'opposent qu'une faible action élastique en réponse aux efforts mis en jeu. En effet, sous l'effet de la poussée d'un camion, qui peut peser jusqu'à plusieurs dizaines de tonnes, lesdits élastomères se compressent trop rapidement et leur performance d'amortissement en est limitée.

La présente invention a pour but de remédier à ces inconvénients avec notamment un butoir présentant des capacités d'amortissement optimisées.

Un autre but de l'invention est de proposer un butoir amortisseur dont le montage est facilité.

Un autre but de l'invention est de proposer un procédé d'assemblage et de montage d'un tel butoir, notamment sur la surface arrière d'une remorque de camion.

D'autres buts et avantages de la présente invention apparaîtront au cours de la description qui va suivre qui n'est cependant donnée qu'à titre indicatif.

L'invention concerne tout d'abord un butoir amortisseur, notamment pour véhicule automobile, constitué d'un corps équipé d'au moins un organe de contact et assujetti à des moyens élastiques, caractérisé par le fait que :
- le corps présente un socle arrière de fixation et au moins un évidement traversant débouchant au niveau d'une ouverture avant et au niveau d'une ouverture arrière,
- ledit au moins un organe de contact est inséré dans ledit évidement, et est apte, d'une part, à faire saillie dudit corps au niveau de ladite ouverture avant, et d'autre part, apte à se déplacer dans ledit évidement,
- ladite ouverture avant est apte à retenir ledit au moins un organe de contact dans l'évidement, et ladite ouverture arrière est apte à permettre l'insertion dudit au moins un organe de contact et desdits moyens élastiques dans ledit évidement,
- lesdits moyens élastiques pressent ledit au moins un organe de contact en direction de ladite ouverture avant,
- ledit corps présente en outre des moyens de blocage pour retenir, au moins avant la fixation du butoir, ledit organe de contact et lesdits moyens élastiques dans ledit évidement.

L'invention concerne également un procédé d'assemblage d'un tel butoir amortisseur, notamment sur un véhicule automobile, caractérisé en ce que le procédé présente les étapes suivantes :
- on insère ledit au moins un organe de contact dans ledit évidement au niveau de ladite ouverture arrière,
- on insère lesdits moyens élastiques dans l'évidement au niveau de l'ouverture arrière,
- on compresse les moyens élastiques à l'intérieur dudit corps,
- on escamote lesdits moyens de blocage pour retenir ledit organe de contact et les moyens élastiques dans le corps, les moyens de blocage faisant saillie avec les moyens élastiques pour les maintenir dans un état de compression.

L'invention sera mieux comprise à la lecture de la description suivante accompagnée des dessins en annexe et parmi lesquels :
- la figure 1 est une vue en perspective avant d'un butoir amortisseur conforme à l'invention,
- la figure 2 est une vue arrière en perspective d'un butoir amortisseur tel qu'illustré à la figure 1,
- la figure 3 est une vue de face d'un butoir amortisseur tel qu'illustré à la figure 1,
- la figure 4 est une vue selon la coupe IV-IV telle qu'illustrée à la figure 3,
- la figure 5 est une vue de coupe d'un butoir amortisseur tel qu'illustré à la figure 4, lorsque fixé à une surface arrière de fixation et pour une course maximale de l'organe de contact.

La présente invention a pour objet un butoir amortisseur 1 notamment pour véhicule automobile constitué d'un corps 2 équipé d'au moins un organe de contact 3 assujetti à des moyens élastiques 8.

Selon l'invention :
- le corps 2 présente un socle arrière 11 de fixation et au moins un évidement 4 traversant débouchant au niveau d'une ouverture avant 6 et au niveau d'une ouverture arrière 5,
- ledit au moins un organe de contact 3 est inséré dans ledit évidement 4 est apte, d'une part, à faire saillie dudit corps au niveau de ladite ouverture avant 6, et, d'autre part, apte à se déplacer dans ledit évidement 4,
- ladite ouverture 6 est apte à retenir ledit au moins un organe de contact 3 dans l'évidement, et ladite ouverture arrière 5 est apte à permettre l'insertion dudit au moins un organe de contact 3 et desdits moyens élastiques 8 dans ledit évidement 4,
- lesdits moyens élastiques 8 pressent ledit au moins un organe de contact en direction de ladite ouverture avant 6,
- ledit corps 2 présentant en outre des moyens de blocage 7 pour retenir, au moins avant la fixation du butoir 1, ledit organe de contact 3 et lesdits moyens élastiques 8 dans ledit évidement 4.

Ledit corps 2 peut être réalisé dans un matériau métallique tel qu'un acier inoxydable et peut être fabriqué selon les procédés connus de moulage.

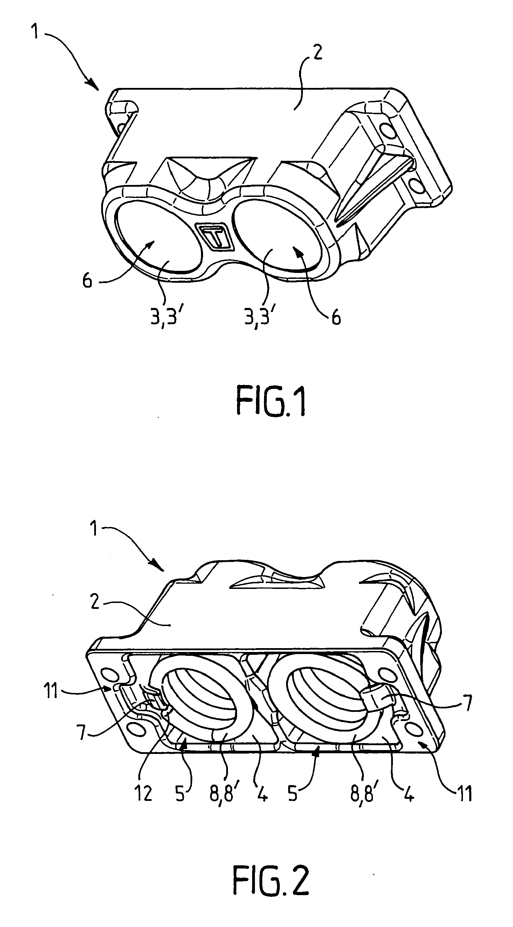

Tel qu'illustré aux figures 1 à 3, ledit butoir présente deux évidements pour la réception des moyens élastiques, et la réception de deux organes de contact 3.

Selon un mode de réalisation, les moyens de blocage pour retenir, au moins avant sa fixation, ledit organe de contact 3 et lesdits moyens élastiques 8 dans le corps 2 sont constitués par au moins une patte 7 attenante audit corps 2 et apte à être courbée pour venir faire saillie avec lesdits moyens élastiques 8.

Selon un mode de réalisation, ledit organe de contact 3 est une sphère 3'.

Selon un mode de réalisation, les moyens élastiques 8 sont constitués par un ressort 8' hélicoïdal à spires. Plus précisément, ledit ressort hélicoïdal 8 est un ressort de compression. Il est constitué d'un fil de matière élastique, notamment métallique s'enroulant de manière hélicoïdale. Ledit ressort présente à ses extrémités un décroché 12.

Avantageusement, la dernière spire d'une des extrémités dudit ressort hélicoïdal constitue un siège pour la réception de l'organe de contact constitué par une sphère 3'.

Avantageusement, lesdits organes élastiques 8, sont aptes à être pré-compressés dans le corps 2. Le ressort hélicoïdal 8' est ainsi pré-compressé sous une pression équivalente à dix tonnes.

Selon un mode de réalisation, ladite au moins une patte 7 présente une épaisseur sensiblement égale au diamètre du fil élastique constituant ledit ressort hélicoïdal 8', ladite patte 7 étant apte à faire saillie avec la dernière spire du ressort 8' au niveau de son décroché 12.

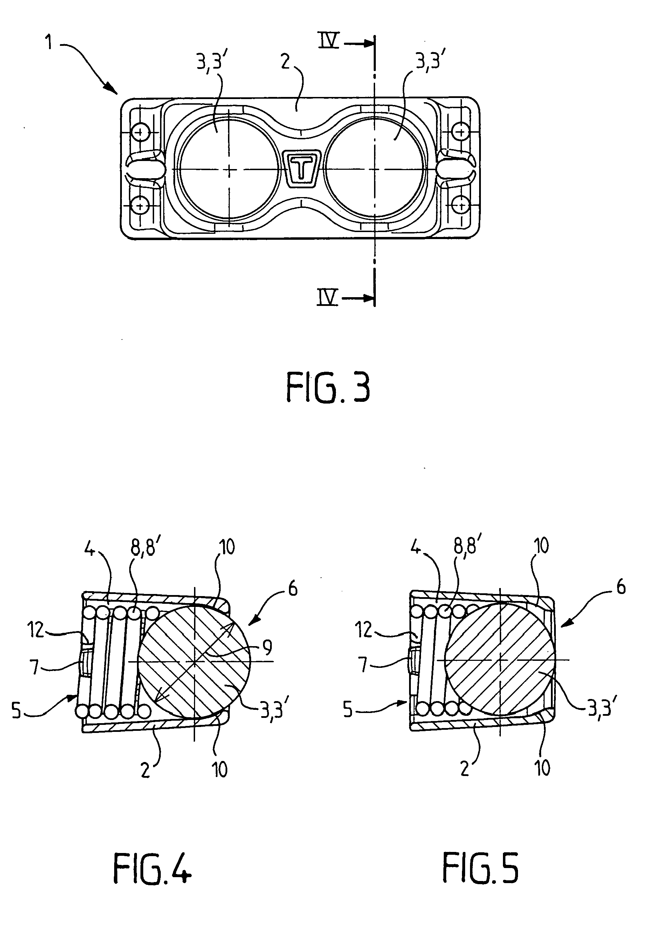

Selon un mode de réalisation, tel qu'illustré aux figures 4 et 5, ledit évidement 4, à proximité de l'ouverture avant 6 présente un rétrécissement de section 10 apte à épouser la sphère 3', au moins sur une portion de surface, et constituer ainsi un siège pour ladite sphère 3'.

Ainsi, telle qu'illustrée à la figure 4, dans une position de repos, ladite sphère 3' est pressée par ledit ressort hélicoïdal 8' à faire saillie dudit corps 2 au niveau de ladite ouverture avant 6, ladite sphère étant retenue au niveau de ladite ouverture avant 6 au niveau du rétrécissement de section.

Selon un mode de réalisation particulier, ladite sphère présente un diamètre 9 de 80 mm et dépasse de l'ouverture avant 6 du corps 2 de 15 mm. Selon ce mode de réalisation particulier, tel qu'illustré à la figure 5, l'organe de contact 3 et notamment la sphère présente une course de déplacement dans ledit évidement de 15 mm.

Tels qu'illustrés aux figures 1 et 4, lesdits moyens élastiques, et notamment le ressort hélicoïdal 8' présente une largeur légèrement inférieure à la largeur dudit évidement 4 traversant. Ledit organe élastique, et notamment ledit ressort hélicoïdal 8' est maintenu en position, tel qu'illustré à la figure 2 au niveau des quatre surfaces opposées constituant ledit évidement.

Selon un mode de réalisation, le corps 2 présente une longueur entre l'ouverture arrière 5 et l'ouverture avant 6 de 105 mm. Cette dimension est avantageusement maintenue la plus petite possible.

L'invention concerne également un procédé d'assemblage d'un butoir amortisseur. Le procédé présente les étapes suivantes :
- on insère l'organe de contact 3 dans ledit évidement 4 au niveau de ladite ouverture arrière (5),
- on insère lesdits moyens élastiques 8 dans l'évidement au niveau de l'ouverture arrière 5,
- on compresse les moyens élastiques à l'intérieur dudit socle, notamment au moyen d'une presse hydraulique,
- on escamote lesdits moyens de blocage 7 pour retenir l'organe de contact 3 et les moyens élastiques 8 dans le corps 2, les moyens de blocage 7 faisant saillie avec les moyens élastiques 8 pour les maintenir dans un état de compression.

Selon un mode de réalisation du procédé, on soumet les moyens élastiques, et notamment le ressort hélicoïdal 8, à une force d'environ 10 tonnes lors de l'étape de compression desdits moyens élastiques.

Cette étape est réalisée avantageusement au moyen d'une presse hydraulique 8 qui vient presser lesdits moyens élastiques et notamment ledit ressort hélicoïdal 8 dans ledit évidement 4 traversant. Avantageusement, lors d'une même étape de compression, la presse hydraulique vient courber ladite patte 7 attenante audit corps 2 pour faire saillie avec lesdits moyens élastiques et notamment ledit ressort 8. A la fin de l'étape tels qu'illustrés à la figure 2 ou à la figure 4, lesdits moyens élastiques et notamment ledit ressort sont maintenus dans un état de compression dans le corps 2 avec l'organe de contact 3. Tel qu'illustré en vue de coupe à la figure 4, il se peut que la dernière spire à une extrémité dudit ressort 8 dépasse de l'ouverture arrière 5 en dehors dudit corps 2.

L'invention concerne également un procédé de montage, notamment sur un véhicule automobile, d'un butoir amortisseur assemblé selon le procédé d'assemblage qui comprend les étapes suivantes :
- on plaque le socle arrière 11 de fixation dudit corps sur une surface arrière de montage,
- on fixe le corps 2 sur ladite surface arrière de montage, notamment au moyen d'un système à vis ou à boulon pour assurer la compression finale des moyens élastiques, dépassant, le cas échéant légèrement de ladite ouverture arrière.

Il convient de remarquer que les moyens de blocage 7 faisant saillie avec lesdits moyens élastiques 8 sont dimensionnés pour résister à des efforts sensiblement légèrement supérieurs aux efforts issus de la compression des moyens élastiques du procédé d'assemblage. Lorsqu'installé et en configuration d'utilisation, notamment, lorsque l'organe de contact est soumis à de fortes contraintes, les efforts sont supportés majoritairement par le ressort au niveau de la surface de montage. Autrement dit, avantageusement, lesdits moyens de blocage 7 ne servent qu'à l'assemblage dudit butoir conforme à l'invention et non à supporter les efforts dynamiques en configuration d'utilisation.

Naturellement, d'autres modes de mise en oeuvre, à la portée de l'homme de l'art, auraient pu être envisagés sans pour autant sortir du cadre de l'invention.

## Revendications

1. Butoir amortisseur (1), notamment pour véhicule automobile, constitué d'un corps équipé d'au moins un organe de contact et assujetti à des moyens élastiques, **caractérisé par le fait que** :
- le corps (2) présente un socle arrière (11) de fixation et au moins un évidement (4) traversant débouchant au niveau d'une ouverture avant (6) et au niveau d'une ouverture arrière (5),
- ledit au moins un organe de contact (3) est inséré dans ledit évidement (4), et est, d'une part, apte à faire saillie dudit corps (2) au niveau de ladite ouverture avant (6), et d'autre part, apte à se déplacer dans ledit évidement (4),
- ladite ouverture avant (6) est apte à retenir ledit au moins un organe de contact (3) dans l'évidement, et ladite ouverture arrière (5) est apte à permettre l'insertion dudit au moins un organe de contact (3) et desdits moyens élastiques (8) dans ledit évidement (4),
- lesdits moyens élastiques (8) pressent ledit au moins un organe de contact (3) en direction de ladite ouverture avant (6),
- ledit corps (2) présente, en outre, des moyens de blocage (7) pour retenir, au moins avant la fixation du butoir (1), ledit organe de contact (3) et lesdits moyens élastiques (8) dans ledit évidement (4).

2. Butoir amortisseur (1) selon la revendication 1, **caractérisé en ce que** les moyens de blocage (7) sont constitués par au moins une patte (7) attenante audit corps (2) apte à être courbée pour venir faire saillie avec lesdits moyens élastiques (8).

3. Butoir amortisseur (1) selon la revendication 1, **caractérisé en ce que** l'organe de contact (3) est une sphère (3').

4. Butoir amortisseur (1) selon la revendication 1, **caractérisé en ce que** les moyens élastiques (8) sont constitués par un ressort (8') hélicoïdal à spires.

5. Butoir amortisseur (1) selon les revendications 2 et 4,
**caractérisé en ce que** ladite patte (7) présente une épaisseur sensiblement égale au diamètre du fil constituant ledit ressort hélicoïdal, ladite patte (7) étant apte à faire saillie avec la dernière spire du ressort (8'), au niveau de son décroché (12).

6. Butoir amortisseur (1) selon la revendication 3, **caractérisé en ce que** ledit évidement (4), à proximité de l'ouverture avant, présente un rétrécissement de section (10) apte à épouser la sphère (3'), au moins sur une portion de surface, et constituer ainsi un siège pour ladite sphère (3').

7. Butoir amortisseur (1) selon la revendication 1, **caractérisé en ce que** lesdits moyens élastiques (8) sont aptes à être pré-compressés dans ledit corps (2).

8. Procédé d'assemblage d'un butoir amortisseur (1) selon la revendication 1, notamment sur un véhicule automobile, **caractérisé en ce que** le procédé présente les étapes suivantes :
- on insère ledit au moins un organe de contact (3) dans ledit évidement (4) au niveau de ladite ouverture arrière (5),
- on insère lesdits moyens élastiques (8) dans l'évidement au niveau de l'ouverture arrière (5),
- on compresse les moyens élastiques (8) à l'intérieur dudit corps (2),
- on escamote lesdits moyens de blocage (7) pour retenir l'organe de contact (3) et les moyens élastiques (8) dans le corps (2), les moyens de blocage (7) faisant saillie avec les moyens élastiques pour les maintenir dans un état de compression.

9. Procédé de montage selon la revendication 8, **caractérisé en ce qu'**on soumet les moyens élastiques (8) à une force d'environ 10 tonnes lors de la compression desdits moyens élastiques.

10. Procédé de montage, notamment sur un véhicule automobile, d'un butoir amortisseur (1), assemblé selon la revendication 8, **caractérisé en ce qu'**il comprend les étapes suivantes :
- on plaque le socle arrière (11) de fixation dudit corps (2) sur une surface de montage,
- on fixe le corps (2) sur ladite surface de montage, notamment au moyen d'un système à vis ou boulon/écrou, pour assurer la compression finale des moyens élastiques qui, le cas échéant, dépassaient légèrement de ladite ouverture arrière (5).
